Europäisches Patentamt

(19) European Patent Office

Office européen des brevets

(11) Publication number: **0 308 026 B1**

(12) # EUROPEAN PATENT SPECIFICATION

(45) Date of publication of patent specification :
21.08.91 Bulletin 91/34

(21) Application number : 88201999.5

(22) Date of filing : 13.09.88

(51) Int. Cl.⁵ : **C10J 3/50, B01J 3/02**

(54) **Feed vessel apparatus for coal gasification.**

(30) Priority : 18.09.87 US 98152
18.09.87 US 98588
18.09.87 US 98589
18.09.87 US 98590

(43) Date of publication of application :
22.03.89 Bulletin 89/12

(45) Publication of the grant of the patent :
21.08.91 Bulletin 91/34

(84) Designated Contracting States :
**DE GB IT NL**

(56) References cited :
**EP-A- 0 014 769**
**FR-A- 1 531 685**
**GB-A- 2 103 387**
**LU-A- 43 947**

(73) Proprietor : **SHELL INTERNATIONALE**
**RESEARCH MAATSCHAPPIJ B.V.**
**Carel van Bylandtlaan 30**
**NL-2596 HR Den Haag (NL)**

(72) Inventor : **Salter, James Arthur**
**603 Whitehurst Court**
**Katy Texas 77450 (US)**
Inventor : **Scott, Andrew Michael**
**Badhuisweg 3**
**NL-1031 CM Amsterdam (NL)**
Inventor : **Eckstein, Gunter Klaus**
**Ueberseering 35**
**Hamburg (DE)**
Inventor : **Arbore, Charles Michael**
**5702 Kuldell Street**
**Houston Texas 77096 (US)**
Inventor : **McCusker, James Joseph**
**11906 Quail Creek Drive**
**Houston Texas 77070 (US)**
Inventor : **Terlouw, Teunis**
**Badhuisweg 3**
**NL-1031 CM Amsterdam (NL)**
Inventor : **Everts, Rudi**
**Carel van Bylandtlaaan 30**
**NL-2596 HR The Hague (NL)**
Inventor : **Dirkse, Hendricus Arien**
**Badhuisweg 3**
**NL-1031 CM Amsterdam (NL)**

(74) Representative : **Aalbers, Onno et al**
**P.O. Box 302**
**NL-2501 CH The Hague (NL)**

EP 0 308 026 B1

## Description

The present invention relates to an apparatus for equalizing the flow rate of a particulate solids and gas mixture discharged in a uniform manner from a feed vessel to a receiving reactor. In particular, this invention relates to an apparatus for equalizing the flow rate of a pulverized coal and gas mixture discharged in a uniform manner from a feed vessel, advantageously having multiple outlets, to a pressurized coal gasification reactor, hereinafter referred to as a gasifier, for the manufacture of synthesis gas. More in particular, the invention relates to an apparatus for stabilizing the mass flow rate of dry coal feed to a reactor.

Various devices have been built for discharging substances which tend to flow easily by gravity, such as grain. While devices such as those disclosed in U.S. Patent Specifications Nos. 3,289,396 and 3,367,724 are concerned with providing "efficient discharge" of particulate material from a bulk storage tank and avoiding bridging and incomplete discharging from such tanks, these devices do not equalize the flow rate of a particulate solids and gas mixture discharged in a uniform manner from a feed vessel apparatus having multiple outlets to a pressurized receiving reactor as does the present invention.

The present invention is directed to overcoming this problem in the art.

The invention therefore provides a feed vessel apparatus for equalizing the flow rate of a feed vessel apparatus for equalizing the flow rate of a pulverized coal and gas mixture discharged in a uniform manner to a receiving coal gasification reactor, comprising : a pressurized vessel having opening means at the lower end thereof for discharging said pulverized coal and gas mixture ; at least two geometrically similar containers having downwardly converging walls and mounted substantially within said pressurized vessel, each of said containers having a longitudinal axis substantially parallel to the longitudinal axis of said pressurized vessel ; each of said containers having an inlet orifice at the upper end thereof for receiving said mixture and an outlet orifice at the lower end thereof for discharging said mixture therefrom ; and wherein said containers are cone-shaped having an included angle less than about 90 degrees ; the diameter of said outlet orifice of each container being larger than the maximum bridging diameter of said solids ; said containers being positioned adjacent each other and intersecting to form an imaginary common plane therebetween at the point of intersection, the lower end of said intersection being at a determined distance perpendicular to an imaginary horizontal plane common to the opening means of said containers ; characterized in that a rigid plate-like partition is positioned along the imaginary common plane between said containers, said partition having a lower end near the lower end of said intersection.

The invention will now be described in more detail by way of example by reference to the accompanying drawings, in which :

Fig. 1 illustrates a sectional view of an embodiment of the present invention ;

Fig. 2 is an isometric view of an advantageous embodiment of the invention with the lower portion shown in phantom.

Fig. 3 is a cross-section of Fig. 1 taken along line I-I ;

Fig. 4 represents schematically an apparatus for minimizing mass flow rate fluctuations of a reactive or catalystic solids and gas mixture ;

Fig. 5 is a cut-away view of element 50 shown in fig. 4 ; and

Fig. 6 represents schematically an alternative to the embodiment of fig. 5.

In gasification generation of synthesis gas occurs by partially combusting hydrocarbon fuel, such as coal, at relatively high temperatures in the range of 800 to 2000°C and at a pressure range of from 1 to $200 \cdot 10^5$ Pa in the presence of oxygen or oxygen-containing gases such as air or a mixture of air and oxygen, in a gasifier. In an advantageous embodiment of the present invention, the fuel and gas mixture is discharged from a feed vessel apparatus, advantageously having multiple outlets, each outlet being in communication with at least one burner associated with the gasifier. Typically, a gasifier will have burners in diametrically opposing positions. Generally, the burners have their discharge ends positioned to introduce the agents of combustion into the resulting gasifier flame.

Of particular importance in the manufacture of synthesis gas is the uniform manner in which the particulate fuel is introduced to the burners within the gasifier so as to minimize fluctuations in the mass flow rate of the fuel being supplied to the burners. If the mass flow rate of the particulate fuel fluctuates, zones of underheating are generated next to zones of overheating in the gasifier. As a result, in the zones of underheating the fuel is not completely gasified and in zones of overheating the fuel is completely converted into less valuable products, viz. carbon dioxide and water vapor. Additionally, local high temperatures in the gasifier could damage the refractory lining which is normally arranged at the inner surface of the gasifier wall and to the burners of the gasifier.

The optimum case of one fuel feed vessel apparatus per burner is capital intensive. Therefore, it becomes necessary to reduce the number of feed vessels by providing a feed vessel having at least two outlets such that the apparatus and method for operating the apparatus equalizes the flow rate of the solids uniformly discharged from the feed vessel to the gasifier.

An advantage of the present invention is that of uniformly discharging a particulate solids and gas mixture to a gasifier and thereby, preventing zones of underheating and overheating within the reactor.

A further advantage of the present invention is the protection of the refractory lining within the gasifier and burners and other equipment within the gasifier due to preventing zones of underheating and overheating.

An additional advantage of the present invention is more efficient utilization of fuel in the production of synthesis gas.

Although the invention is described hereinafter primarily with reference to pulverized coal, the method and apparatus according to the invention are also suitable for other finely divided solids which are fluidizable but do not flow easily by gravity, i.e. tend to form obstructions to flow, such as a bridge above the discharge outlet as exhibited by flour and cement. Likewise, the present invention is also suitable for other finely divided solid fuels which could be partially combusted, such as lignite, anthracite, bituminous, brown coal, soot, petroleum coke, and the like. The size of the solid carbonaceous fuel is such that 90% by weight of the fuel has a particle size smaller than No. 6 mesh (A.S.T.M.)(3,36 mm). Advantageously, the size of solid carbonaceous fuel is such that 90% by weight of the fuel has a particle size smaller than 100 mesh (A.S.T.M.)(0.149 mm).

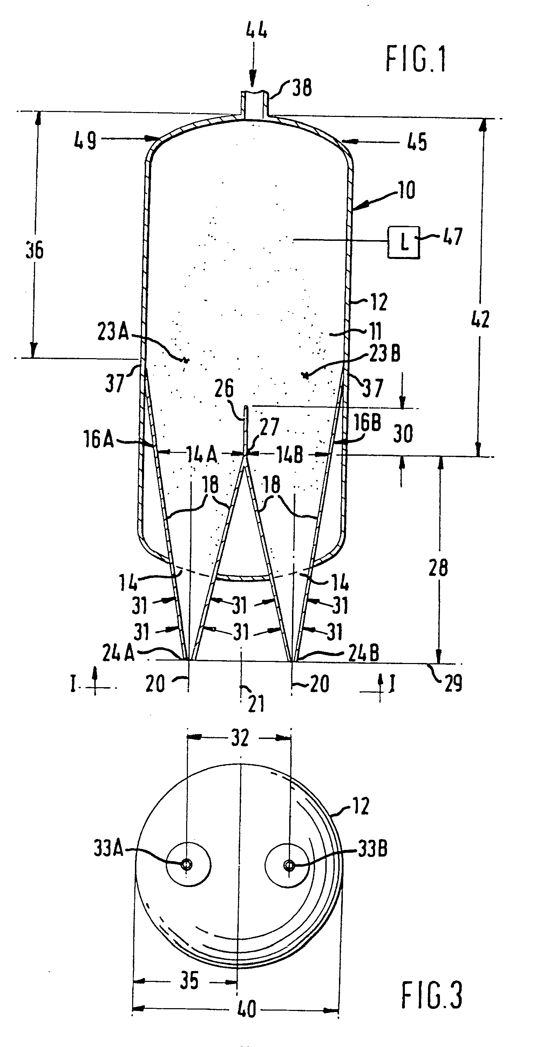

Referring to Fig. 1 of the drawing, a feed vessel apparatus 10 for uniformly discharging a particulate solids and gas mixture 11 to a pressurized receiving vessel or reactor (not shown) generally comprises a pressurized feed vessel 12 having opening means 14 at the lower end thereof for discharging the solids and gas mixture 11 ; at least two geometrically similar containers 16A, B having downwardly-converging walls 18 and mounted substantially within the pressurized feed vessel 12, each of the containers 16A, B having a longitudinal axis 20 substantially parallel to the longitudinal axis 21 of the pressurized vessel 12 ; each of the containers 16A, B having an inlet orifice 23A, B at the upper end thereof for receiving the mixture 11 and outlet orificeS 24A, B at the lower end thereof for discharging the mixture therefrom ; and the containers 16A, B being positioned adjacent each other and intersecting to form an imaginary common plane 26 therebetween at the point of intersection, the lower end of said intersection 27 being at a selected distance 28 perpendicular to an imaginary horizontal plane 29 common to the opening means 14 of the containers 16A, B.

The pressurized vessel 12, advantageously having a cylindrical portion, is structured to withstand pressures ranging from "ca". 0 · 10⁵ Pa absolute to about 200 · 10⁵ Pa absolute. The opening means 14 at the lower end of the vessel 12 should be of sufficient size to at least allow for discharging of the solids and gas mixture 11.

At least two, and possibly more, geometrically similar containers 16A, B mounted partially (advantageously substantially) within the pressurized vessel 12 have downwardly-converging walls 18, for example cone-shaped having an included angle of less than about 90 degrees, in particular 20-40 degrees. Geometric similarity of the containers 16A, B is advantageous to minimize any interferences between containers 16A, B with respect to equalizing the flow rate of the solids discharged therefrom.

Mounting the containers 16A, B substantially within the pressurized vessel 12 greatly simplifies the structure of the containers 16A, B which would otherwise have to withstand high differential pressures across the container walls 18. The interior of the walls 18 may be lined with polyethylene or with any other material well known to the art for reducing wall friction. By lowering the wall friction, the included angle of the containers 16A, B can be greater.

Advantageously, each of the containers 16A, B has a longitudinal axis 20 which is substantially parallel to the longitudinal axis 21 of the pressurized vessel 12 because parallelism contributes to uniform solids movement by gravity so as to achieve an equalized flow rate of solids discharged therefrom. If the containers are substantially not parallel, then eccentric flow channels may form and adversely affect the uniformity of the discharge flow rate.

Each of the containers 16A, B has an inlet orifice 23A,B at the upper end thereof for receiving the mixture 11 and an outlet orifice 24A, B at the lower end thereof for discharging the mixture therefrom.

The containers 16A, B are positioned adjacent each other and intersect to form an imaginary common plane 26 therebetween at the point of intersection. The lower end of said intersection 27 is at a selected distance 28 perpendicular to an imaginary horizontal plane 29 common to the discharge ports 24A, B of the containers 16A, B. In particular, the selected distance 28 is critical to maintaining a uniform and equally-distributed mass flow rate of solids throughout the entire cross-sectional area of the pressure feed vessel 12. The distance 28 is selected to achieve a uniform distribution of flow to the burners of the gasifier and avoid interference between the containers 16A, B. If the distance perpendicular to the plane 29 is greater than the selected distance 28, then a larger diameter feed vessel apparatus would be required to maintain the selected included angle of the containers 16A, B. If the distance perpendicular to the plane 29 is less than the selected distance 28, then interference between containers 16A, B would occur and thus nonequalizing solids and gas flow would be discharged therefrom.

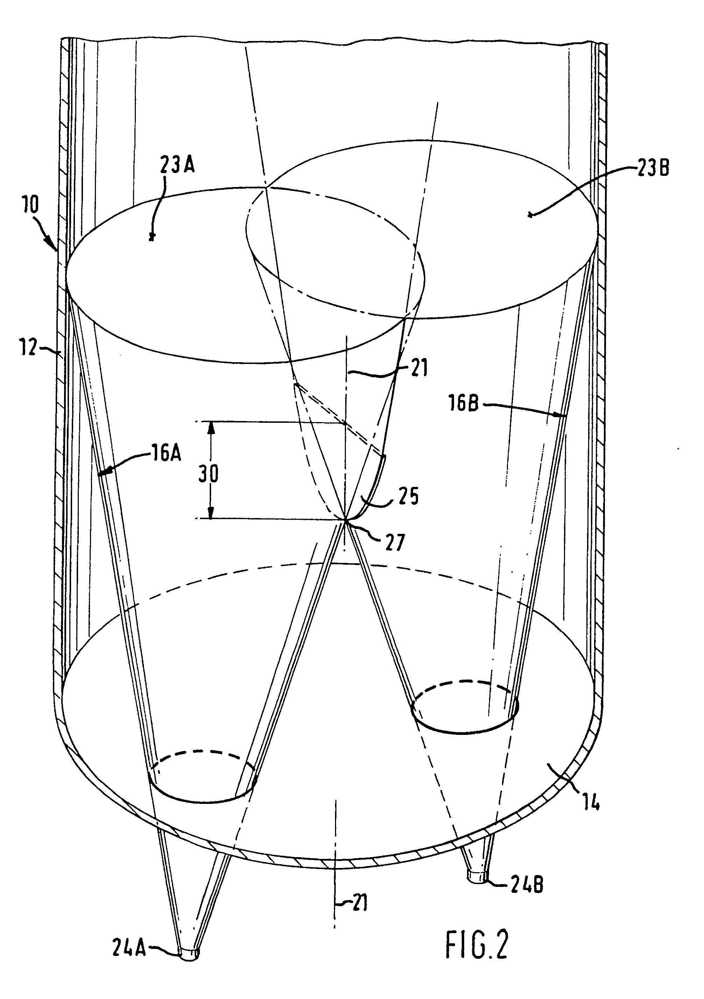

Referring to Fig. 2 a partition 25, advantageously structured as both rigid and plate-like, is positioned along the imaginary common plane 26 (Fig. 1) between the containers 16A, B. The partition 25 has a lower end near the lower end of the intersection 27.

The partition 25 ensures that the solids will be drawn equally from all areas of their respective portions of the bed of solids within the pressure vessel 12 and manifolding or baffling the flow of solids so as to ensure an equalized and controlled mass flow rate of solids discharged from the containers 16A, B. An advantageous height 30 of the partition 25 is such that it is equal to distance 36 from the top of feed vessel 12. The maximum height of the partition 25 above plane 29 should advantageously be the distance 36 from the top of vessel 12 minus 1.0 times the maximum bridging dimension. The minimum height bridging dimension. The minimum height of the partition 25 above plane 29 should advantageously be the distance 36 plus 0.5 times the maximum bridging dimension.

Removability of the partition 25 allows substitution of partitions having different geometries and heights 30 to accommodate various operating conditions such as different coal types having characteristic solids properties.

The diameter of the outlet orifices 24A, B of each container 16A, B in the present invention is smaller than the maximum bridging dimension of the solids. The maximum bridging dimension is generally defined as the greatest distance the particle bed can span thus forming a stable obstruction to flow. The dimension is a function of granular solids flow properties, the geometry and material of contruction of the feed vessel, etc. Hence, if the diameter of the outlet orifices 24A, B were smaller than the maximum bridging dimension, then a stable obstruction to flow would occur.

In the present invention, for example, if the maximum bridging dimension of the solids was about 45-61 cm, then the diameter of the outlet orifices 24A, B would be greater than 61 cm in the absence of flow promotion or initiation.

However, by injecting a first gas 31 the lower portions of the containers 16A, B and aerating the solids therein the diameters of the outlet orifices 24A, B of each container 16A, B can be decreased to approximately less than 1.3 cm.

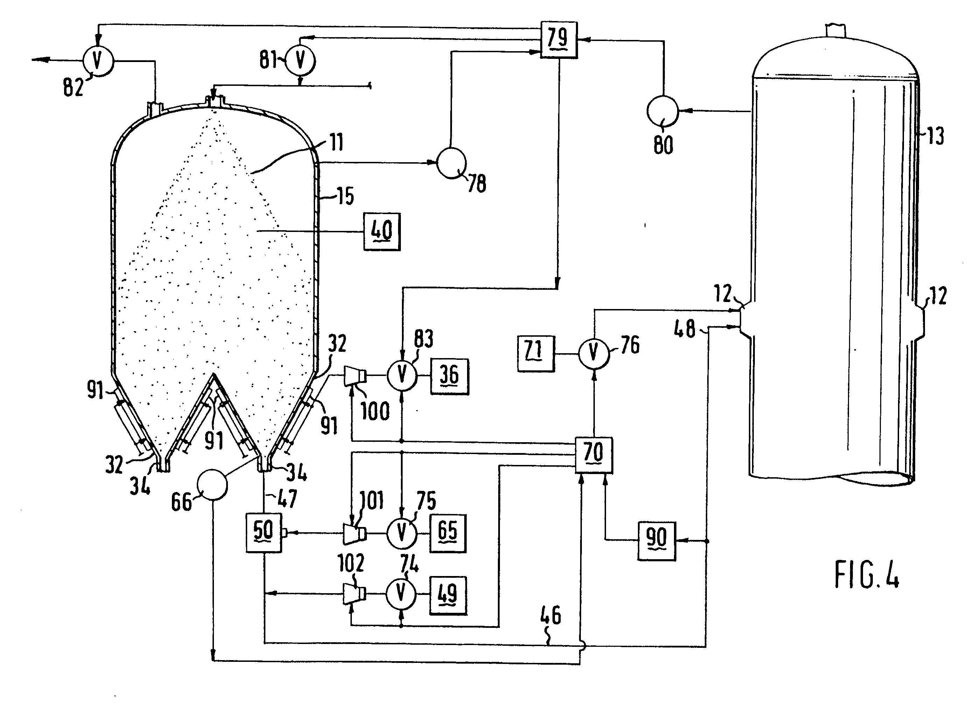

Referring to Fig. 3, the distance 32 between the centers 33A, B of the outlet orifices 24A, B of the containers 16A, B at the opening means 14 of the pressurized feed vessel 12 are substantially equal to the radius 35 of the pressurized feed vessel 12. The basis for the relationship of the distance 32 to the radius 35 is a consequence of the previously selected included angle of containers 16A, B and the distance 28.

The distance 36 (Fig. 1) between the top 37 of the containers 16A, B and the top 38 of the pressurized vessel 12 is at least substantially equal to 1.5 times the diameter 40 (Fig. 3) of the pressurized vessel 12. The basis for the relationship of the distance 36 to the diameter 40 is a consequence of the selected included angle of the containers 16A, B, the distance 28, and the height of the web 30 (Fig. 2). If the distance 36 is substantially less than 1.5 times the diameter 40, then the volume of solids and gas mixture within the feed vessel falls below about 50% by volume of the feed vessel thereby causing communication of solids between containers 16A, B will result. Also, introducing new solids into the feed vessel will result in unsteady flow from outlet orifices 24A, B.

Advantageously, the distance 42 (Fig. 1) between the lower end of the intersection 27 of the containers 16A, B and the top 38 of the pressurized feed vessel 12 is at least equal to 1.5 times the diameter 40 (Fig. 3) of the pressurized feed vessel 12. The basis for the relationship of the distance 42 to the diameter 40 is a consequence of the selected diameter 40 of the feed vessel apparatus and the selected included angle of containers 16A, B.

In operation of the above-described apparatus the method generally comprises introducing the mixture 11 into a pressurized vessel 12, for example at or near the upper end 44 of the vessel 12.

The flow rate of a second gas 45, such as nitrogen, is injected into the pressurized vessel 12 at a selected rate not to exceed the terminal falling velocity of the solids within the containers 16A, B. The terminal falling velocity is defined as a particle in free fall in a still gas such that the particle is acted upon only by gravitational forces which accelerate the particle from rest until a terminal steady state velocity is reached.

The flow rate of the second gas 45 is controlled at a rate not to exceed the terminal falling velocity of the solids because excessive elutriation of very fine particles may occur thereby affecting the flow properties of solids by removing a considerably fraction of the fine particles present in the solids and not having obtained an equalized flow rate of discharged solids.

A selected upward or downward superficial velocity of the interstitial gas 31, such as nitrogen, within the pressurized feed vessel 12 having a selected diameter is achieved by controlling the injection rate of gases 31 and 45. Superficial velocity is defined as the average velocity of a gas for a specified cross-section neglecting the presence of the particulate solids. Maintaining an upward superficial velocity of the first second gas 31 permits a reduction in the density of the bed thus equalizing the flow rate through the discharge ports. Maintaining a downward superficial velocity permits transport of a higher solids/gas mixture.

One way of obtaining a selected upward or downward superficial velocity of the first gas 31 is to control the flow rate of gas in the mixture 11 within the pressurized vessel 12 such as by venting gas in the mixture 11 from the pressurized vessel 12, preferably in the upper portion 49 thereof. Alternatively, the selected upward superficial velocity of the first gas 31 can be obtained by controlling the rate of injecting gas from source 31. Similarly, the selected downward superficial velocity of the second gas 45 can be obtained by controlling the rate of injecting gas from source 45.

Constructing the vessel 12 in the manner previously described which minimizes the interference between compartments 16A, B permits benefits to be derived from the injection of a second gas 31.

The injection of a gas 31 typically into the lower one quarter of the compartments 16A, B can bring about several effects relating to the equalized uniform discharge flow of particulate solids from the described vessel. The injection of a gas 31 can produce many beneficial results, three of which are to break bridges, increase discharge rate over the nonaerated case and induce uniform flow from a discharge opening smaller than the previously defined minimum opening dimension for nonaerated discharge flow. Since the vessel 12 has been constructed to minimize interference between compartments 16A, B, independent control over flow rate, for example, is possible.

The optimal gas flow 31 for maximum solids discharge rate with minimal variation in rate can be associated with the slip velocity between the gas 31 and the flowing particle stream. Slip velocity in this case is taken as the relative difference in velocity between the injected gas 31 and the components of the flowing gas/particle stream which exits via orifices 24A, B. The velocities of the gas and gas particle streams may be determined at a reference cross section coincident with the effective gas 31 injection point(s).

The downward flowing component of the gas 31, cocurrent with the gas/particle stream produces the desired effects of permitting a measure of control over discharge rate, increasing rate over the nonaerated case and smoothing out variations in solids flow rate.

In the event the gas 31 injection rate is high then an upward flow of gas counter to the downward flow of solids/gas would be produced. This upward gas flow would produce relatively high slip velocities, reduce the density of the flowing particle/gas stream, create a contribution to the vent gas stream 49, and effectively reduce the discharge rate. In effect the downward moving particles would be held up by the counter current flow of gas 31. In the event the upward flow of gas is very high then gas bubbles would be expected to form. The presence of relatively large gas bubbles in the flowing stream would produce irregularities in the solids discharge rate.

In the event the gas 31 injection velocity is very low then only a downward cocurrent flow of gas 31 and gas/solids would occur. The velocity of the resultant gas/solids stream would be low and result in a lower solids discharge rate. Continuing to lower the gas 31 injection rate will eventually result in a nonflowing condition at the discharge orifice.

During operation when there is little or no countercurrent gas flow it would be necessary to introduce make-up gas 45 into the vapor cap. Depending on the discharge rate of solids and gas the flow rate of vent stream 45 may actually be zero if the make-up rate exactly matches the solids discharge rate.

Advantageously, a volume of solids and gas mixture 11 within the containers 16A, B of 1.5 times the diameter 14A, B, of the containers 16A, B should be maintained in the feed vessel 10 to minimize the effect of level and discharging the flow out of the feed vessel apparatus. Should the volume be substantially less than the specified amount, then fluctuations in the mass flow rate of solids introduced to the burners would occur and the above-mentioned problems of overheating and underheating would be observed. A level-sensing device 47 for monitoring the volume of the mixture 11 within the containers 16A, B may take the form of gamma-ray absorption or in any other manner well known to the art which would not provide an obstruction to flow.

The method further comprises controlling the flow rate of the mixture 11 discharged through the outlet orifices 24A, B of each of the containers 16A, B to the receiving reactor (not shown) by controlling the flow rate of the first gas 31, such as nitrogen, syngas, or other carrier gas, through the walls 18 of the containers 16A, B at the lower portion thereof. The mixture 11 may be discharged from outlet orifices 24A, B of both containers 16A, B simultaneously, from less than all of the containers 16A, B, and/or at different rates from the containers 16A, B by controlling the flow rate of the first gas 31 as described above.

The pressure of the pressure vessel 12 is maintained higher than the pressure of the receiving reactor (not shown) to convey the solids to the receiving reactor.

Referring to Fig. 4, an apparatus for minimizing mass flow rate fluctuations of a combustible, particulate solids and gas mixture 11 in the frequency range of about 0.1 to 100 Hertz transported to at least one burner 12 of a gasifier 13 generally comprises means for receiving the mixture 11 shown for illustrative purposes as a multiple outlet feed vessel 15 having downwardly-converging walls 32 and openings 34 at a lower end thereof for discharging the mixture 11 therefrom. The lower end of the feed vessel 15 can be cone-shaped having an included angle less than 90 degrees.

Means for controlling a discharge flow rate of the mixture 11 exiting the feed vessel 15 advantageously includes aerating the feed vessel 15 at the lower end thereof to form an aerated portion by injecting gas 36, such as nitrogen, carbon dioxide, or synthesis gas, as shown in Fig. 4.

Additionally, the aeration can be compartmentalized. Aerating the lower end of the feed vessel 15 allows for smaller discharge openings 34 and a transport conduit 46 having a smaller diameter.

The structure of the feed vessel 15, as shown in Fig. 4 and described above, in conjunction with aerating the mixture 11 immediately above the lower end of the feed vessel 15 permit transport of coal and gas mixtures 11 at much higher suspension densities, e.g. greater than 200 kg/m$^3$, than are attainable with systems which fluidize the coal and gas mixtures throughout the feed vessel. This is significant in coal and gas mixtures used in the gasification process because the aeration gas is frequently inert and would act as a diluant in the product gas thereby reducing the heating value per standard cubic foot.

Alternatively, means for controlling a discharge flow rate of the mixture 11 can take the form of means for mechanically vibrating the mixture such as by using a hammering device, an acoustic horn, or in any other manner well known to the art.

Conventional means for controlling the discharge flow rate, such as valves, are not preferred since they introduce obstructions in the transport of the coal and hence, contribute to fluctuations in the mass flow rate of the coal to the burners of the gasifier.

The apparatus of fig. 4 includes means for maintaining a level of solids 40 in the feed vessel 11 of at least about 50 percent by height above the discharge openings which can take the form of radiation densitometers, ultrasound, or mechanical detectors or in any other manner well known to the art.

Maintaining the level at at least about 50 percent lessens the effect of the level and sluicing on the flow out of the feed vessel 15 which would influence the coal flow to the burner.

A minimum differential pressure between the feed vessel 15 and the gasifier 13 of at least about 2 to 10 bar is maintained to prevent flash back or ingress of synthesis gas into the feed vessel 15 and to maintain coal solids flow to the burners 12 of the gasifier 13. As an alternative to maintaining a differential pressure using conventional means, such as a valve located between the feed vessel 15 and the gasifier 13, the present invention employs means for determining the pressure of the feed vessel 15, such as a pressure transducer 78 in communication with a differential pressure controller 79 ; means for determining the pressure of the gasifier 13, such as a pressure transducer 80 in communication with controller 79 ; means for comparing the determined pressures via the controller 79 ; and means for adjusting the pressure within the feed vessel 15 such as by regulating valves 81, 82, 83 to increase or decrease the pressure within the vessel 15.

Maintaining a differential pressure between the feed vessel 15 and the gasifier 13 is in part achieved by injecting gas into a pressurized gas cap area in the upper portion of the feed vessel 15. The pressure in the vessel 15 is controlled by a separate controller 79 which adds pressurized gas via valve 81 or relieves gas via valve 82 at a rate of at least about $0.1 \cdot 10^5$ Pa /min to ensure adequate control of the pressure within the feed vessel 15.

Local aeration, such as aeration pads 91, in the portion immediately above the discharge openings 34 of the feed vessel 15 prevents the coal solids in the mixture 11 from bridging or becoming packed within the feed vessel 15 due to the differential pressure being maintained between the feed vessel 15 and the gasifier 13. The packing of solids in the lower portion of the feed vessel 15 would result in unsteady or no coal flow from the feed vessel 15.

It is advantageous that separate gas supplies for injecting gas and maintaining a differential pressure between the feed vessel 15 and the gasifier 13 be provided, as illustrated in Fig. 4, so that a change in pressure or flow of one supply does not influence the other.

Means for pneumatically transporting the mixture 11 from the feed vessel 15 to the gasifier 13 is shown in Fig. 4 for illustrative purposes as including a conduit 46 having entry and exit portions 47, 48. The entry portion 47 is in fluid communication with the lower end of the feed vessel 15 and the exit portion 48 is in fluid communication with the burner 12 of the gasifier 13. Means for injecting a gas 49, such as nitrogen, carbon dioxide, or syngas, under pressure into the mixture 11 at at least one point in a conduit 46 is accomplished in a manner well known to the art. Means for pulsing the gas 49 at a selected amplitude and frequency can be accomplished using a variable frequency horn, shown in Fig. 4 as 102, or in any other manner well known to the art. The first gas 49 can also be injected and pulsed at a selected amplitude and frequency along other points (not shown) of the conduit 46 to disperse slugs or plugs of the coal and gas mixture in the conduit 46. Selection of suitable location(s) for injecting the first gas 49 are based on the increasing amplitude of the slugs.

It would not be preferable to inject the first gas at a location too close to the discharge opening 34 of the feed vessel 15 because injected gas would increase the back pressure at the feed vessel 15 discharge which would result in a nonuniform discharge of the coal and gas mixture from the vessel 15.

The conduit 46 is made as smooth as possible, i.e. no protrusions into the flowing mixture 11 and minimal recesses and bends. Any bends or curvatures of the conduit 46 advantageously have radii of curvature equal to 1.20 m or ten conduit 46 diameter, whichever is larger, so that the coal remains in suspension within the conduit 46.

Advantageously, the diameter of the conduit is in the range of 4 mm to 150 mm, in particular 6-100 mm. A diameter within the specified range is desirable to achieve high velocities within the conduit, say 15 m/sec for suspension densities of 100-500 kg/m$^3$. High velocities promote a uniformly mixed coal solids and gas mixture introduced to the burners of the gasifier. Conduits having a diameter larger than 150 mm do not provide the degree of mixing required to provide a uniformly dispersed coal solids and gas mixture to the burners of the gasifier; whereas, conduits smaller than 4 mm tend to cause the coal particles to bridge within the conduit 46.

The suspension density of the coal and gas mixture 11 varies depending upon the type of coal being used. For example, the solids suspension density of Illinois No. 5 coal normally ranges from 225 to 425 kg/m³, with 350 kg/m³ being the advantageous suspension density. Under extreme conditions the suspension density can vary from 50-800 kg/m³.

Means for selectively controlling the density of the mixture 11 being transported from the feed vessel 15 to the gasifier 13 is shown in Fig. 4 for illustrative purposes as including means for determining (directly or indirectly) the suspension density of the mixture at or near the discharge of the feed vessel 15, such as a pressure transducer 66, capacitance densitometer 90, ultrasound meter, gamma ray densitometer, or opacity to an electromagnetic radiator; means for comparing the determined suspension density with a preselected density, such as controller 70; and means for adjusting the suspension density, amplitude, and frequency of the mixture 11.

Signals are transmitted from the controller 70 to means for adjusting the flow rate, such as valve 83, and means for adjusting the amplitude and frequency, such as a horn 100, of the gas 36 pulses injected into the lower end of the means for receiving said mixture 15.

Likewise, signals are transmitted from the controller 70 to means for adjusting the flow rate, such as valve 74, and means for adjusting the amplitude and frequency, such as a horn 102, of gas 49 injected into the conduit 46. Additionally, signals are transmitted from the controller 70 to means for adjusting the flow rate, such as valve 75, and means for adjusting the amplitude and frequency, such as a horn 101, of gas 65 injected into the cylinder 50. Advantageously, the means for controlling the amplitude and frequency gases 36, 65, and 49 are independently controllable.

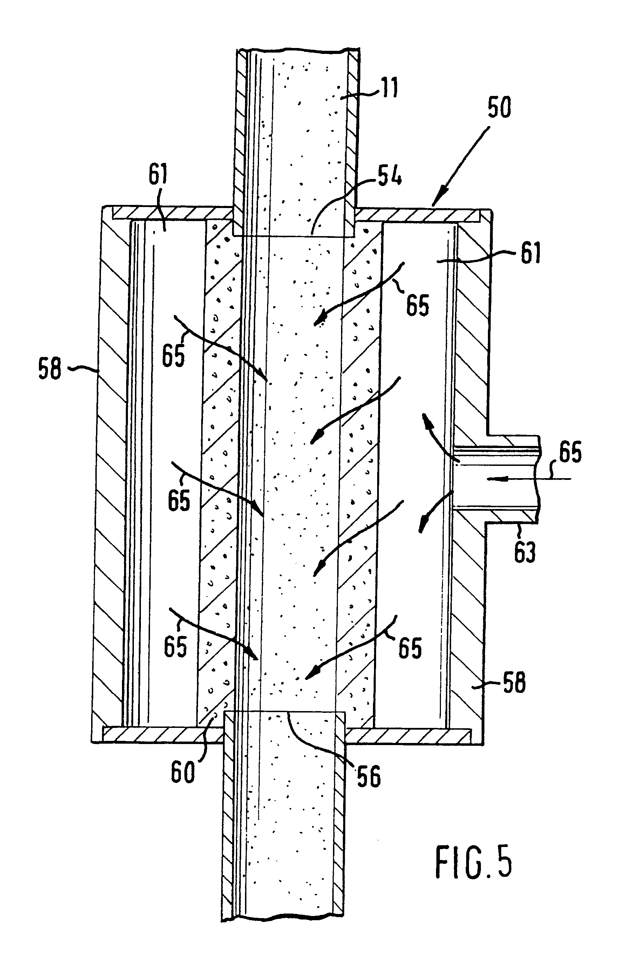

The right circular cylinder 50 shown in Fig. 4 is in fluid communication with the discharge opening 34 of the feed vessel 15. Fig. 5 is a cross-sectional view of the cylinder 50 shown in Fig. 4. The cylinder 50 has entry and exit ports 54, 56, for passing the mixture 11 therethrough. The cylinder 50 has substantially concentric outer and inner walls 58, 60, forming an annulus 61. The outer wall 58 has at least one inlet port 63 for injecting a second gas 65 such as nitrogen, carbon dioxide, or syngas, into the annulus 61. The inner wall 60, which can be made of a porous or perforated material, is in contact with the mixture 11. The second gas 65 permeates from the enclosed annulus space 61 through the porous or perforated material and into the mixture 11. The present invention includes means for injecting gas 65 advantageously in a pulse-like manner, at a selected amplitude and frequency, such as by a horn 101, into the annulus and through the porous inner wall of the cylinder 50 being in contact with the mixture.

The atmosphere of the gasifier should be a reducing environment. Means for selectively controlling the weight ratio of oxygen to mixture introduced to the gasifier 13 is desirable. Advantageously, the ratio is maintained so that the ratio of oxygen to moisture and ash free coal is in the range of 0.6 to 1.2, more preferably 0.8 to 0.9. Controlling the ratio can be accomplished in various ways such as transmitting a signal from the controller 70 to a means for selectively controlling the rate of oxygen-containing gas 71 introduced into the gasifier 13, such as valve 76. If the determined mass flow rate of the coal solids and gas mixture 11 flowing to the burners 12 as measured by the densitometer 90 is below the preselected mass flow rate by the mass flow rate-controller 70, then the mass flow rate of oxygen-containing gas 71 would be decreased and/or the injection rate of the first or second gas 49, 65, respectively, decreased.

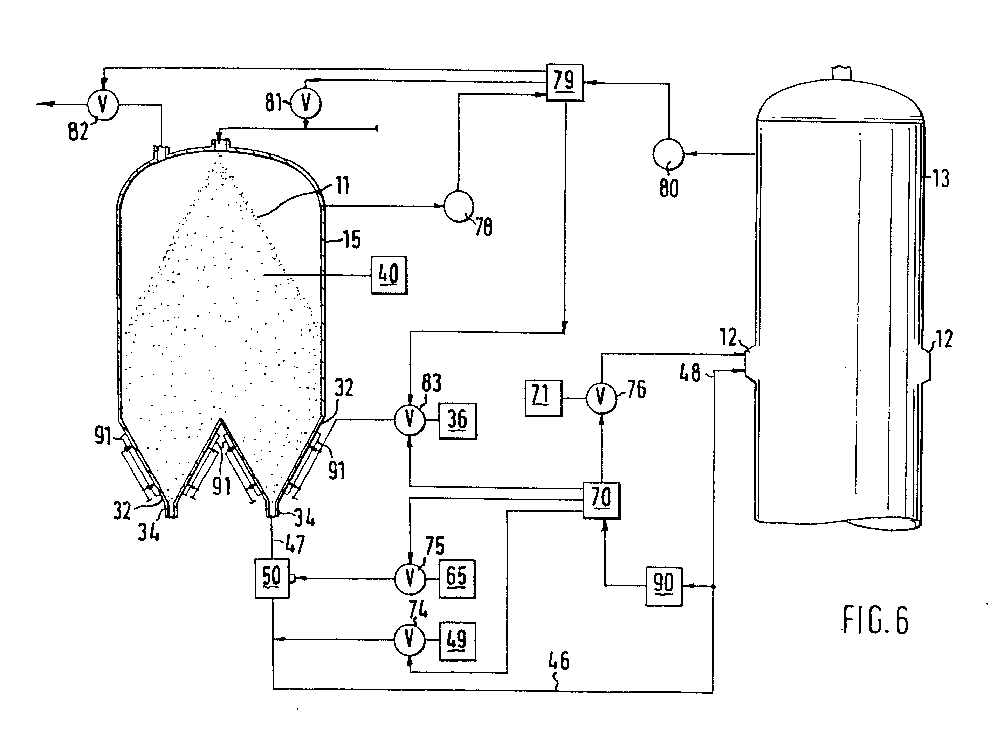

Referring to Fig. 6 an alternative to the embodiment of Fig. 5 has been shown, in which the same reference numerals as in Fig. 5 have been used, except that the means 66, 100, 101 and 102 are omitted.

The foregoing description of the invention is merely intended to be explanatory thereof, and various changes in the details of the described apparatus and method may be made within the scope of the appended claims without departing from the spirit of the invention.

## Claims

1. A feed vessel apparatus for equalizing the flow rate of a pulverized coal and gas mixture discharged in a uniform manner to a receiving coal gasification reactor, comprising: a pressurized vessel having opening means at the lower end thereof for discharging said pulverized coal and gas mixture; at least two geometrically similar containers having downwardly converging walls and mounted substantially within said pressurized vessel, each of said containers having a longitudinal axis substantially parallel to the longitudinal axis of said pressurized vessel; each of said containers having an inlet orifice at the upper end thereof for receiving said mixture and an outlet orifice at the lower end thereof for discharging said mixture therefrom; and wherein said containers are cone-shaped having an included angle less than about 90 degrees; the diameter of said outlet orifice of each container being larger than the maximum bridging diameter of said solids; said containers being positioned adjacent each other and intersecting to form an imaginary common plane therebetween at the point of intersection, the lower end of said intersection being at a determined distance perpendicular to an imaginary horizontal plane common to the opening means of said containers ; characterized in that a rigid plate-like partition is positioned along the imaginary common plane between said containers, said partition having a lower end near the lower end of said intersection.

2. The apparatus as claimed in claim 1 characterized in that said partition is removable.

3. The apparatus as claimed in claims 1 or 2 characterized in that the distance between the centers of said outlet orifices of said containers at the opening means of said pressurized vessel are substantially equal to the radius of said pressurized vessel.

4. The apparatus as claimed in claims 1 or 2 characterized in that the distance between the top of said containers and the top of said pressurized vessel is at least substantially equal to 1.5 times the diameter of said pressurized vessel.

5. The apparatus as claimed in claims 1 or 2 characterized in that the distance between the lower end of the intersection of said containers and the top of said pressurized vessel is at least substantially equal to 1.5 times the diameter of said pressurized vessel.

6. The apparatus as claimed in any one of claims 1-5 characterized in that the minimum height of said partition above said outlet orifices is 1.5 times the diameter of said pressurized vessel plus 0.5 times the maximum bridging dimension of the solids within said vessel.

7. The apparatus as claimed in any one of claims 1-5 characterized in that the maximum height of said partition above said outlet orifices is 1.5 times the diameter of said pressure vessel at the point where said containers are mounted within said pressurized vessel minus 1.0 times the maximum bridging dimension of the solids within said vessel.

**Patentansprüche**

1. Beschickungskesselvorrichtung zum Vergleichmäßigen der Fließrate eines Gemisches aus Kohlenstaub und Gas, welches in gleichmäßiger Weise an einen aufnehmenden Kohlevergasungsreaktor abgegeben wird, umfassend : einen unter Druck gesetzten Kessel, der an seinem unteren Ende eine Öffnungseinrichtung hat zum begeben des Gemisches aus Kohlenstaub und Gas ; wenigstens zwei geometrisch ähnliche Behälter, die nach,unten konvergierende Winde haben und im wesentlichen in dem unter Druck gesetzten Kessel angebracht sind, wobei jeder der Behälter eine Längsachse im wesentlichen parallel zur Längsachse des unter Druck gesetzten Kessels hat ; jeder der Behälter eine Einlaßöffnung an seinem oberen Ende zum Aufnehmen des Gemisches und eine Auslaßöffnung an seinem unteren Ende zum Abgeben des Gemisches hat, und wobei die Behälter kegelförmig sind mit einem eingeschlossenen Winkel von kleiner als etwa 90° ; der Durchmesser der Auslaßöffnung jedes Behälters größer ist als der maximale Brückenbildungsdurchmesser der Feststoffe ; die Behälter nebeneinander und einander schneidend angeordnet sind, um an der Schnittstelle eine imaginäre gemeinsame Ebene zwischen ihnen zu bilden, und das untere Ende des Schnittes sich in einem vorbestimmten Abstand rechtwinklig zu einer imaginären horizontalen Ebene befindet, die den öffnungseinrichtungen der Behälter gemeinsam ist ; dadurch gekennzeichnet, daß entlang der imaginären gemeinsamen Ebene zwischen den Behältern eine starre plattenartige Trennwand angeordnet ist, die ein unteres Ende hat, welches nahe dem unteren Ende des Schnittes liegt.

2. Vorrichtung nach Anspruch 1, dadurch gekennzeichnet, daß die Trennwand entfernbar ist.

3. Vorrichtung nach Anspruch 1 oder 2, dadurch gekennzeichnet, daß der Abstand zwischen den Mitten der Auslaßöffnungen der Behälter an der Öffnungseinrichtung des unter Druck gesetzten Kessels im wesentlichen gleich dem Radius des unter Druck gesetzten Kessels ist.

4. Vorrichtung nach Anspruch 1 oder 2, dadurch gekennzeichnet, daß der Abstand zwischen dem Oberende der Behälter und dem Oberende des unter Druck gesetzten Kessels wenigstens im wesentlichen das 1,5 fache des Durchmessers des unter Druck gesetzten Kessels beträgt.

5. Vorrichtung nach Anspruch 1 oder 2, dadurch gekennzeichnet, daß der Abstand zwischen dem unteren Ende des Schnittes der Behälter und dem Oberende des unter Druck gesetzten Kessels wenigstens im wesentlichen das 1,5 fache des Durchmessers des unter Druck gesetzten Kessels beträgt.

6. Vorrichtung nach irgendeinem der Ansprüche 1 bis 5, dadurch gekennzeichnet, daß die minimale Höhe der Trennwand über den Auslaßöffnungen das 1,5 fache des Durchmessers des unter Druck gesetzten Kessels plus das 0,5 fache der maximalen Brückenbildungsabmessung der Feststoffe in dem Kessel beträgt.

7. Vorrichtung nach irgendeinem der Ansprüche 1 bis 5, dadurch gekennzeichnet, daß die maximale Höhe der Trennwand über den Auslaßöffnungen das 1,5 fache des Durchmessers des unter Druck gesetzten Kessels an der Stelle, wo die Behälter in dem unter Druck gesetzten Kessel angebracht sind, minus das 1,0 fache der maximalen Brückenbildungsabmessung der Feststoffe in dem Kessel beträgt.

## Revendications

1. Installation de cuve d'alimentation destinée à uniformiser le débit d'un mélange de charbon pulvérisé et de gaz débité de façon uniforme dans un réacteur récepteur de gazéification du charbon, comprenant : une cuve mise sous pression possédant des moyens formant ouverture à son extrémité inférieure, pour débiter ledit mélange de charbon pulvérisé et de gaz ; au moins deux conteneurs géométriquement analogues, possédant des parois qui convergent vers le bas et qui sont montés sensiblement à l'intérieur de ladite cuve mise sous pression, chacun desdits conteneurs possédant un axe longitudinal sensiblement parallèle à l'axe longitudinal de ladite cuve mise sous pression ; chacun desdits conteneur possédant un orifice d'entrée à son extrémité supérieure, pour recevoir ledit mélange, et un orifice de sortie à son extrémité inférieure, pour débiter ledit mélange hors de ce conteneur, et dans lequel lesdits conteneurs sont d'une forme conique, avec un angle inclu inférieur à environ 90° ; le diamètre dudit orifice de sortie de chaque conteneur étant supérieur au diamètre maximum de formation de voûtes desdits solides ; lesdits conteneurs étant placés adjacents l'un à l'autre et se coupant pour former entre eux un plan commun fictif au point d'intersection, l'extrémité inférieure de ladite intersection se trouvant à une distance déterminée dans une direction perpendiculaire à un plan horizontal fictif commun aux moyens formant ouvertures desdits conteneurs ; caractérisée en ce qu'une cloison rigide, en forme de plaque, est positionnée le long du plan commun fictif entre lesdits conteneurs, ladite cloison possédant une extrémité inférieure proche de l'extrémité inférieure de ladite intersection.

2. Installation selon la revendication 1, caractérisée en ce que ladite cloison est amovible.

3. Installation selon une des revendications 1 et 2, caractérisée en ce que la distance entre les centres desdits orifices de sortie desdits conteneurs, au droit des moyens formant ouvertures de ladite cuve sous pression, est sensiblement égale au rayon de ladite cuve sous pression.

4. Installation selon une des revendications 1 et 2, caractérisée en ce que la distance entre l'extrémité supérieure desdits conteneurs et l'extrémité supérieure de ladite cuve mise sous pression est au moins sensiblement égale à 1,5 fois le diamètre de ladite cuve mise sous pression.

5. Installation selon une des revendications 1 et 2, caractérisée en ce que la distance entre l'extrémite inférieure de l'intersection desdits conteneurs et l'extrémité supérieure de ladite cuve mise sous pression est au moins sensiblement égale à 1,5 fois le diamètre de ladite cuve mise sous pression.

6. Installation selon une quelconque des revendications 1 à 5, caractérisée en ce que la hauteur minimale de ladite cloison au-dessus desdits orifices de sortie est de 1,5 fois le diamètre de ladite cuve mise sous pression, plus 0,5 fois la dimension maximum de formation de voûtes des solides contenus dans ladite cuve.

7. Installation selon une quelconque des revendications 1 à 5, caractérisée en ce que la hauteur maximale de ladite cloison au-dessus desdits orifices de sortie est de 1,5 fois le diamètre de ladite cuve mise sous pression au point où lesdits conteneurs sont montés à l'intérieur de ladite cuve mise sous pression, moins 1,0 fois la dimension maximale de formation de voûtes des solides à l'intérieur de ladite cuve.

FIG.1

FIG.3

FIG.2

FIG.4

FIG.5

FIG.6